# EUROPEAN PATENT APPLICATION

(11) **EP 3 276 564 A1**
(43) Date of publication of application: **31.01.2018**
(21) Application number: 17182876.7
(22) Date of filing: 24.07.2017
(51) Int. Cl.: G06Q 30/02

(54) **INTERACTIVE USER-INTERFACE BASED ANALYTICS ENGINE FOR CREATING A COMPREHENSIVE PROFILE OF A USER**

(30) Priority: 26.07.2016 IN 201641025513
(71) Applicant: Mphasis Limited, 560048 Karnataka (IN)
(72) Inventor: Jai, Ganesh, Bangalore 560076, Karnataka (IN); Archisman, Majumdar, Vibhutipura, Bangalore 560037, Karnataka (IN); Udayaadithya, Avadhanam, Bangalore 560097, Karnataka (IN)
(74) Representative: Verriest, Philippe

(57) **Abstract**

A system and method for generating a hypergraph representative of a comprehensive profile of user is provided. A graphical representation of selected user's transactional behavior is generated. Further, user data is retrieved from external systems for a predetermined time period. A first variable set is derived from the retrieved data and classified into data fields such that the variables across relevant data fields are linkable based on predetermined data category types. Further, new data fields are generated for realizing classification of additional retrieved data. A second variable set from the new data is retrieved and classified into new data fields such that variables across relevant new data fields are linkable based on the predetermined data category types. Two or more graphical representations are generated by linking the variables across the relevant data fields based on the predetermined data category types. Finally, a hypergraph is generated by integrating the graphical representations.

## Description

### Field of the invention

The present invention relates generally to the field of data analytics, and in particular relates to a system and method to provide for an interactive user-interface based analytics engine for identifying, segmenting, correlating, combining and profiling complex user data across multiple internal and external data sources, and creating a single profile of a user.

### Background of the invention

Decision making functions of an enterprise require user knowhow for relevant recommendations and responsiveness. With the proliferation of diverse sources, for instance, web, mobile, enterprise transaction data, Point of Sale (PoS) sources, kiosk, wearables etc. there is an abundance of user interaction data available across disparate channels. Information related to user interactions on diverse channels, therefore, would significantly change the way in which enterprises perform decision making. Enterprise systems, therefore, not only require access to internal sources but also access to various external sources, including real-time operational information of users for a comprehensive and holistic understanding of user requirements.

Creation and management of electronic association of user data across diverse channels is one of the challenges faced by existing enterprise system architecture. Data processing systems and database systems in an enterprise system architecture need to be equipped to channelize and compute the plethora of user data across diverse channels efficiently and in real-time.

In light of the above, there is a need for a system and method that provides for an enhanced graphical user-interface based analytics engine for processing user data across enterprise and external interaction channels for creating and providing access to a single view of a user. There is a need for a system and method for efficiently identifying real-time, accurate, comprehensive and actionable details of users from diverse interaction channels. Also, there is a need for a system and method for efficient processing and handling of multi-structured data from diverse interaction channels and building a comprehensive profile of the user.

### Brief description of the accompanying drawings

The present invention is described by way of embodiments illustrated in the accompanying drawings wherein:
Fig. 1 illustrates a block diagram of an interactive user-interface based analytics engine for creating a comprehensive profile of a user, in accordance with an embodiment of the present invention;
Fig. 2 is a detailed block diagram of the interactive user-interface based analytics engine, in accordance with an embodiment of the present invention;
Fig. 2a is a screenshot of an exemplary graphical user-interface display illustrating a representative list of users and user data;
Fig. 2b is a screenshot of an exemplary graphical user-interface display illustrating a representation of the selected user's transaction data based on analysis of data stored in the enterprise databases;
Fig. 2c is a screenshot of an exemplary graphical user-interface display illustrating a representation of the selected user's transaction and profile data based on analysis of data stored in the enterprise databases;
Figs. 2d and 2e illustrate a screen shot of an exemplary graphical user-interface display illustrating a representation of the selected user's data from external systems databases;
Fig. 2f is an exemplary representation of variables ascertained based on analysis of data and linking of variables across field columns, in accordance with various embodiments of the present invention;
Fig.2g is a screenshot of an exemplary graphical user-interface display illustrating a representation of the selected user's comprehensive profile, in accordance with various embodiments of the present invention;
FIG.3 is a flowchart illustrating a method of operating an interactive user-interface based analytics engine, in accordance with various embodiments of the present invention; and
FIG. 4 illustrates an exemplary computer system in which various embodiments of the present invention may be implemented.

### Summary of the invention

A system for generating a hypergraph representative of a comprehensive profile of the user, by invocation of an interactive user-interface by an end-user via a client device is provided. The system comprises a memory storing program instructions and a processor executing program instructions stored in the memory. The system further comprises a user segmentation engine in communication with the processor and configured to generate and render a first graphical representation of a selected user's transactional behavior, based on an analysis of one or more parameters associated with the selected user stored in an enterprise database. The user segmentation engine is further configured to retrieve data associated with the selected user from external systems for a predetermined time period. The system further comprises a data integration engine in communication with the processor and configured to determine a first set of variables from the retrieved data and classify the first set of variables into one or more data fields. The classification results in the variables across relevant data fields being linkable in accordance with one or more predetermined types of data categories associated with the selected user. Further, the data integration engine is configured to generate new data fields for realizing classification of additional retrieved data. The number of new data fields are generated based on an analysis of the additional retrieved data. The generation of new data field columns is triggered after the classification of the first set of variables. The data integration engine is further configured to determine a second set of variables from the retrieved data and classify the second set of variables into the new one or more data fields. The classification results in the variables across the relevant new data fields being linkable in accordance with the one or more predetermined types of data categories associated with the selected user. Furthermore, the data integration engine is configured to generate two or more graphical representations by linking the variables across the relevant new data fields, respectively, in accordance with the one or more predetermined types of data categories associated with the selected user. Finally, the data integration engine is configured to analyze the two or more generated graphical representations, and generate a hypergraph by integrating the two or more graphical representations and the first graphical representation. Based on the hypergraph a comprehensive profile of the selected user is generated.

A computer-implemented method of operating an interactive user-interface based analytics engine for generating a hypergraph representative of a comprehensive profile of the user, by invocation of said interactive user-interface by an end-user, is provided. The method comprises generating and rendering a first graphical representation of a selected user's transactional behavior, based on an analysis of one or more parameters associated with the selected user stored in an enterprise database. Furthermore, the method comprises retrieving data associated with the selected user from external systems for a predetermined time period. The method further comprises determining a first set of variables from the retrieved data. Further, the method comprises classifying the first set of variables into one or more data fields, the classification resulting in the variables across relevant data fields being linkable in accordance with one or more predetermined types of data categories associated with the selected user. The method further comprises generating new data fields for realizing classification of additional retrieved data, the number of new data fields being generated based on an analysis of the additional retrieved data, wherein the generation of new data field columns is triggered after the classification of the first set of variables. Furthermore, the method comprises determining a second set of variables from the retrieved data. Further, the method comprises classifying the second set of variables into the new one or more data fields, the classification resulting in the variables across the relevant new data fields being linkable in accordance with the one or more predetermined types of data associated with the selected user. The method further comprises generating two or more graphical representations by linking the variables across the relevant new data fields, respectively, in accordance with the one or more predetermined types of data categories associated with the selected user. Finally, the method comprises analyzing the two or more generated graphical representations and generating a hypergraph by integrating the two or more graphical representations and the first graphical representation. Based on the hypergraph a comprehensive profile of the selected user is generated.

A computer program product comprising a non-transitory computer-readable medium having computer-readable program code stored thereon, the computer-readable program code comprising instructions that, when executed by a processor, cause the processor to generate and render a first graphical representation of a selected user's transactional behavior, based on an analysis of one or more parameters associated with the selected user stored in an enterprise database. Further, the processor retrieves data associated with the selected user from external systems for a predetermined time period. Furthermore, the processor determines a first set of variables from the retrieved data. The processor classifies the first set of variables into one or more data fields. The classification results in the variables across relevant data fields being linkable in accordance with one or more predetermined types of data categories associated with the selected user. The processor further generates new data fields for realizing classification of additional retrieved data, the number of new data fields being generated based on an analysis of the additional retrieved data, wherein the generation of new data fields is triggered after the classification of the first set of variables. Furthermore, the processor determines a second set of variables from the retrieved data and classifies the second set of variables into the new one or more data fields, the classification resulting in the variables across the relevant new data fields being linkable in accordance with the one or more predetermined types of data associated with the selected user. Further, the processor generates two or more graphical representations by linking the variables across the relevant new data fields, respectively, in accordance with the one or more predetermined types of data categories associated with the selected user. Finally, the processor analyzes the two or more generated graphical representations, and generating a hypergraph by integrating the two or more graphical representations and the first graphical representation. Based on the hypergraph a comprehensive profile of the selected user is generated.

### Detailed description of the invention

A system and method is provided for an interactive user-interface based analytics engine that provides for creation of a complete profile of a user by correlating and combining user details spread across multiple internal and external data sources. Advantageously, the system provides for deriving variables from data obtained from multiple internal and external systems and linking the variables in accordance with various embodiments of the present invention for generating a hypergraph representing real-time user information.

The disclosure is provided in order to enable a person having ordinary skill in the art to practice the invention. Exemplary embodiments herein are provided only for illustrative purposes and various modifications will be readily apparent to persons skilled in the art. The general principles defined herein may be applied to other embodiments and applications without departing from the spirit and scope of the invention. The terminology and phraseology used herein is for the purpose of describing exemplary embodiments and should not be considered limiting. Thus, the present invention is to be accorded the widest scope encompassing numerous alternatives, modifications and equivalents consistent with the principles and features disclosed herein. For purposes of clarity, details relating to technical material that is known in the technical fields related to the invention have been briefly described or omitted so as not to unnecessarily obscure the present invention.

The present invention would now be discussed in context of embodiments as illustrated in the accompanying drawings.

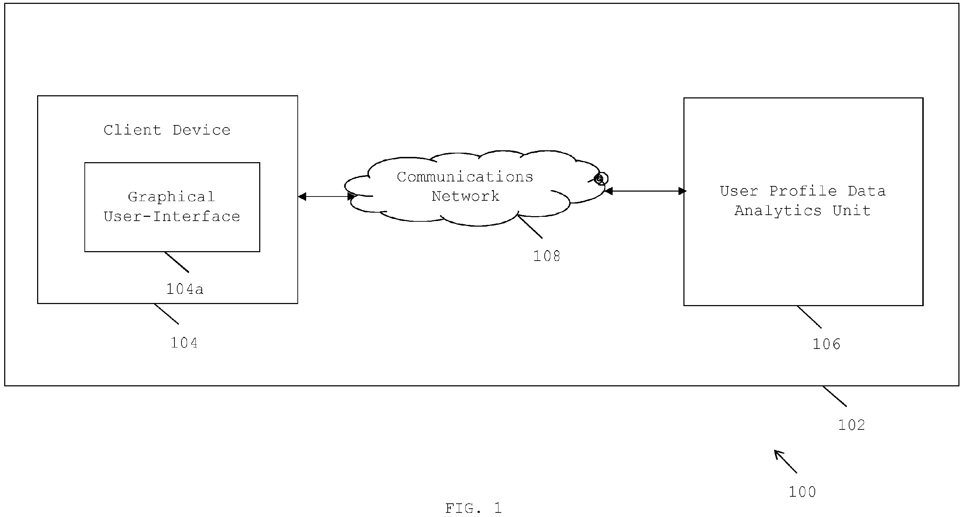

FIG. 1 illustrates a block diagram of an interactive user-interface based analytics engine (system 102) for creating a comprehensive profile of a user, in accordance with various embodiments of the present invention. In an embodiment of the present invention, the system 102 may be implemented in a client-server architecture. The system 102 comprises a client device 104 and a user profile data analytics engine 106. The client device 104 is a front-end component of the system 102 that includes a graphical user-interface 104a accessible by an end-user. The end-user may include a person interested in viewing and/or interacting with the system 102. The user profile data analytics engine 106 is the back-end component of the system 102 which processes complex data obtained from multiple communication channels to generate a comprehensive view of the user's profile. Data includes, but is not limited to, structured data, unstructured data, temporal data, and multi-media datasets obtained from multiple-locations of the user, and from enterprise systems as well as external systems (third party systems). In various exemplary embodiments of the present invention, the data is analyzed, correlated and integrated, using advanced analytics solutions, and represented as a hypergraph structure. A hypergraph structure is a graphical structure where each edge of the graph can connect to any number of vertices that represent various parameters obtained from the processed user data. The comprehensive profile of the user is built using the hypergraph structure, where the hypergraph structure is an evolving structure that represents dynamic changes and real-time data of the user. This will be discussed in detail in later sections of the specification.

The client device 104 and the user profile data analytics engine 106 communicate over a communications network 108. Examples of client device 104 include, but is not limited to, a personal computer, a laptop and any other wired or wireless terminal. The client device 104 is configured to operate a client application which is programmed to carry out the functionalities of the graphical user-interface 104a in accordance with various embodiments of the present invention. The user profile data analytics engine 106 is hosted on a server configured to operate a server-side application which is programmed to carry out the functionalities in accordance with various embodiments of the present invention. The communications network 108 may comprise interconnected software and hardware through which information may be transmitted and received. The communications network 108 may include a Local Area Network (LAN), a Metropolitan Area Network (MAN), a Wide Area Network (WAN), or any other type of wired or wireless network. In another embodiment of the present invention, the system 102 may be implemented in a cloud-computing environment. The functionalities of the graphical user-interface 104a and the user profile data analytics engine 106 may be presented to the end-user as Software as a Service (SaaS).

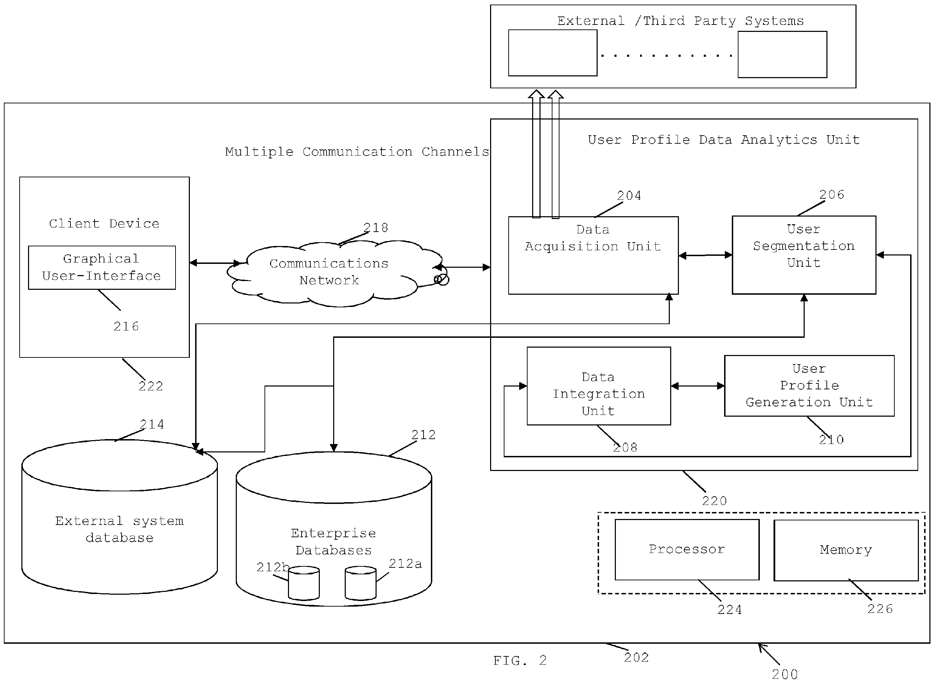

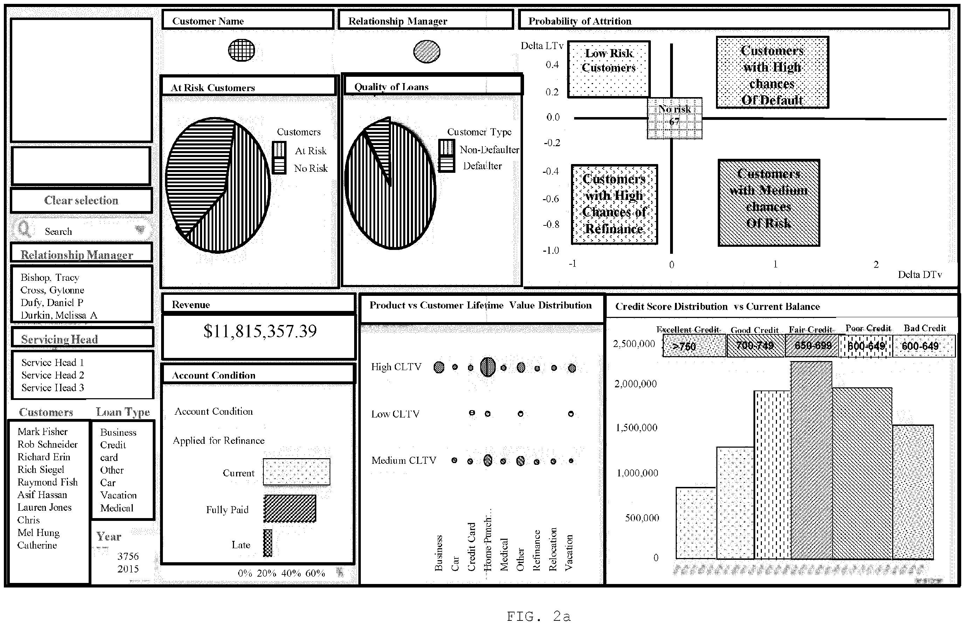

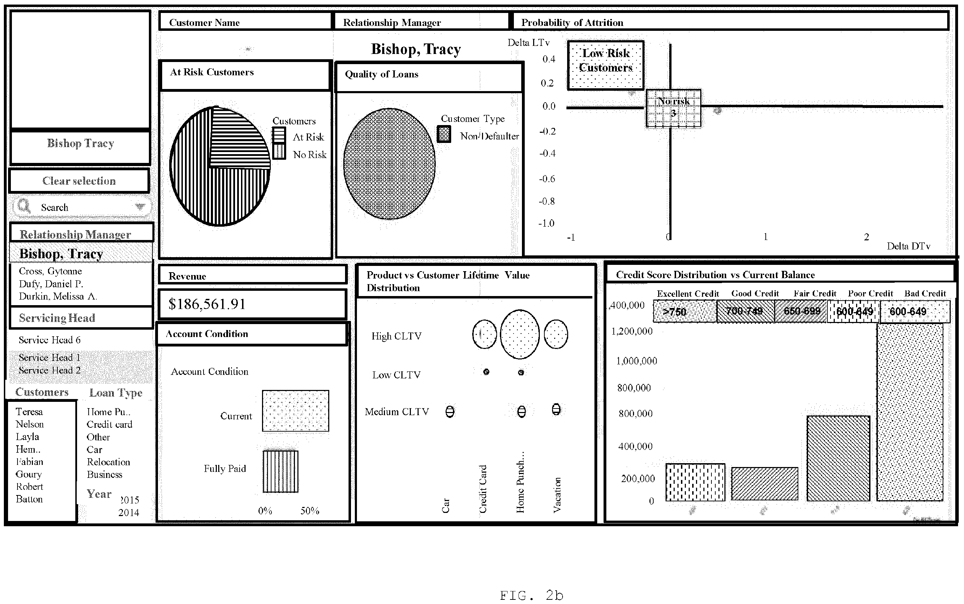

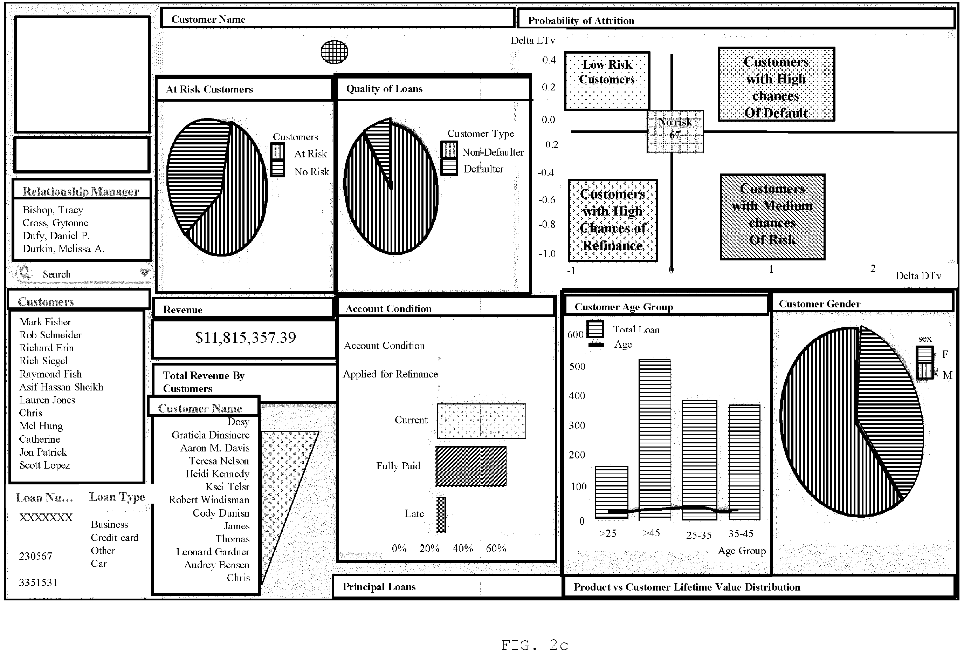

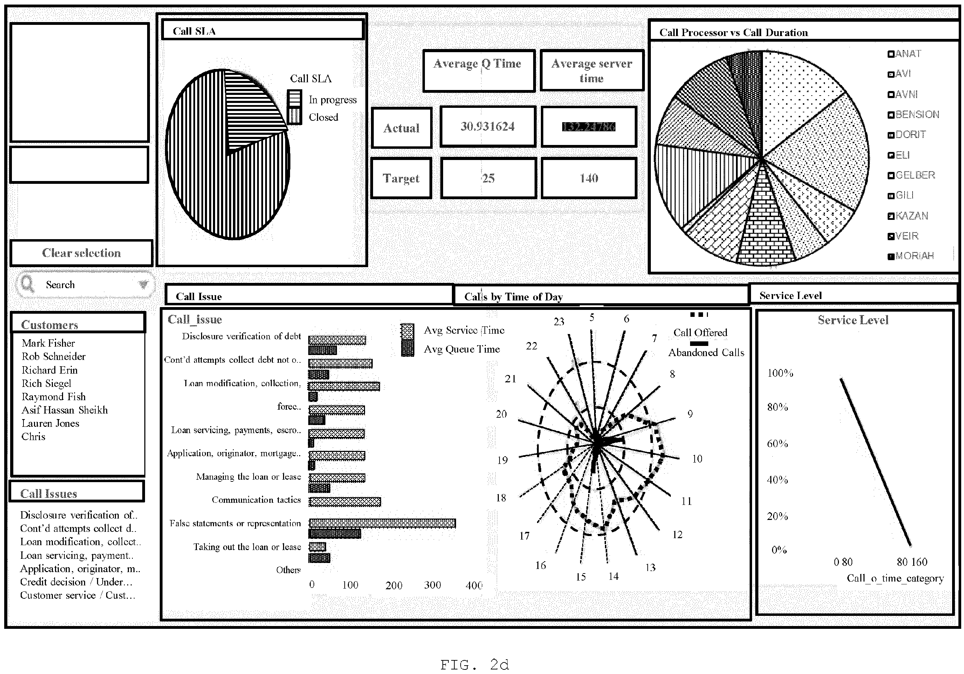

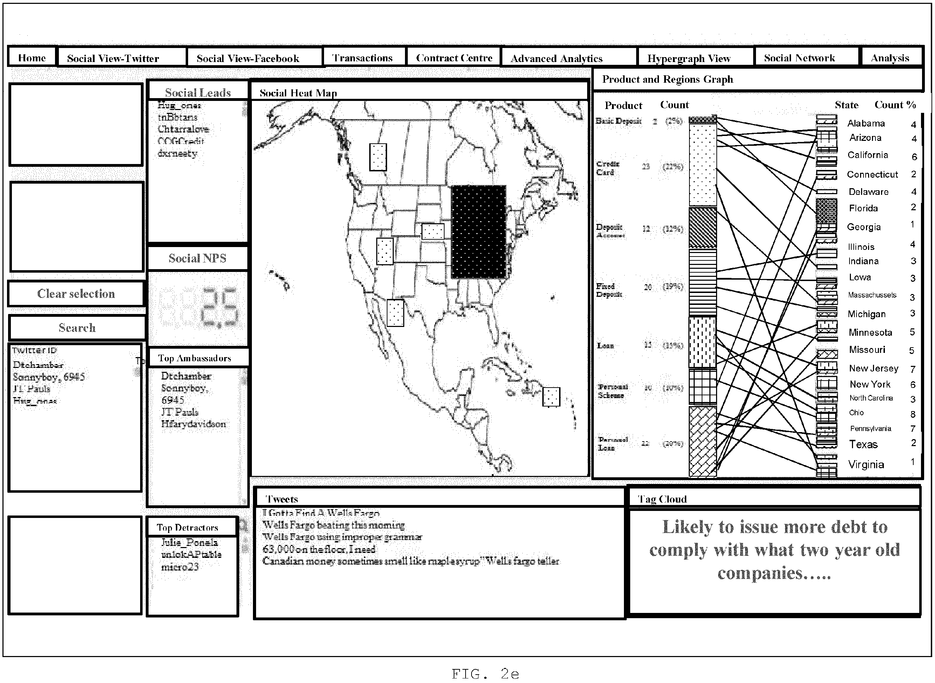

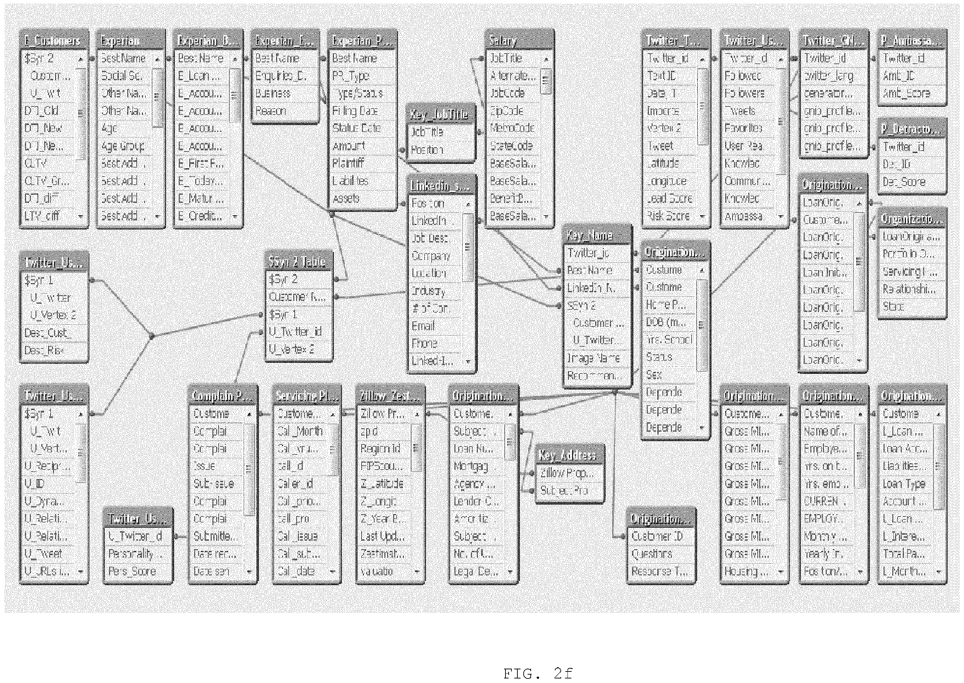

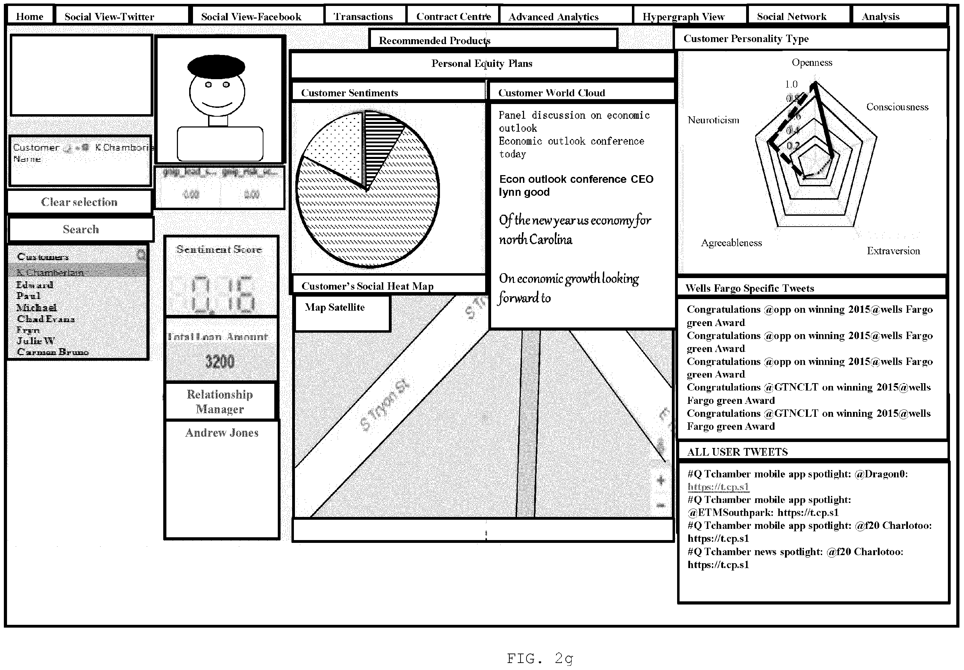

FIG. 2 is a detailed block diagram of the interactive user-interface based analytics engine (system 202) in accordance with various embodiments of the present invention. The user profile data analytics engine 220 of the system 202 comprises a data acquisition engine 204, a user segmentation engine 206, a data integration engine 208, a user profile generation engine 210, one or more enterprise databases 212, and external system databases 214. The end-user accesses the above mentioned engines (204-214) for creating a comprehensive profile of the user via a graphical user-interface 216 of the client device 222. The client device 222 and the user profile data analytics engine 220 communicate over a communications network 218. The data acquisition engine 204, user segmentation engine 206, data integration engine 208, user profile generation engine 210, enterprise databases 212, and external system databases 214 and the graphical user-interface 216 execute various functionalities via a processor 224 using program instructions stored in a memory 226. In various embodiments of the present invention, instructions to run the client application and the server-side application for operating the engines (204-210), the databases (212, 214) and the graphical user-interface 216 are stored in the memory 226 and executed by the processor 224.

In an embodiment of the present invention, the data acquisition engine 204 connects the user profile data analytics engine 220 to various external systems via multiple communications channels. Examples of external systems include social media network servers, web servers, real estate database systems, credit history database systems, kiosk interaction systems, service contact center records, government database systems, user sensor based wearables, multitude of devices, appliances, and applications as well as multimedia datasets. The data acquisition engine 204 is configured to retrieve data from the various external systems and process the data for storing in the external system database 214. In an exemplary embodiment of the present invention, data is collected from external systems through Application Programming Interface (API) based calls or from data uploaded from external systems. The collected data goes through a data cleaning phase, where the variables necessary for analytics is stored in a graph database (not shown). The graph database enables faster and easier mapping of variables retrieved from the external sources. The external system database 214 fetches the processed data from the graph database (not shown) for storing and further processing.

In an embodiment of the present invention, the user profile data analytics engine 220 is connected to the enterprise databases 212. The enterprise database 212 may include an enterprise transaction database 212a and an enterprise User Relationship Management (CRM) database 212b. The enterprise transaction database 212a includes, but is not limited to, user (user) transaction data, call center interaction data, Internet of Things (loT) Analytics data etc. The enterprise User Relationship Management (CRM) database 212b includes, but is not limited to, user profile data, demographics data etc.

In operation, in an embodiment of the present invention, the end-user accesses the system 202 via the graphical user-interface 216 using access credentials. Subsequently, the end-user's access credentials are verified and the end-user is authenticated to access the system 102. After the authentication procedure, the user segmentation engine 206 is invoked, which provides for a list of first order and second order employees of the enterprise who deal with each of the users (customers). The user segmentation engine 206 additionally accesses the enterprise transaction database 212a and enterprise CRM database 212b to analyze various parameters corresponding to the users displayed in the list. Examples of parameters may include, but is not limited to, risk analysis of user's engagements with the enterprise, quality and loan payment data, revenue generation information, product vs. user lifetime distribution data, credit score distribution vs. current balance data, data related to probability of attrition etc. Based on the analysis, the user segmentation engine 206 creates graphical representations using the data to illustratively depict trends of the users' transactional behavior with respect to each of the parameters. In an exemplary embodiment of the present invention, the data is processed and analysed using a combination of proprietary as well as standard statistical analytics techniques. Post the above analysis, the graphical representations are generated. FIG. 2a is a screenshot of an exemplary graphical user-interface display illustrating a representative list of users and user data.

The graphical user-interface 216 prompts the end-user to select a specific user (customer) whose comprehensive profile is desired to be generated by the end-user. Selection of a specific user triggers the user segmentation engine 206 to display trends of the selected user's transactional behavior with respect to each of the parameters (as discussed previously). FIG. 2b is a screenshot of an exemplary graphical user-interface display illustrating a representation of the selected user's transaction data based on analysis of data stored in the enterprise databases 212. Further, the user segmentation engine 206 fetches data from the enterprise CRM database 212b and analyses the data for graphically representing details such as user age group, gender etc. FIG. 2c is a screenshot of an exemplary graphical user-interface display illustrating a representation of the selected user's transaction and profile data based on analysis of data stored in the enterprise databases 212.

The user segmentation engine 206 is further configured to access and analyze data from the external systems databases 214. In an exemplary embodiment of the present invention, the user segmentation engine 206 is configured to access data corresponding to the selected user from the external systems databases 214 for a predetermined time period. Examples of external systems database 214 include, but are not limited to, one or more databases that store user life event data from Facebook®, user conversations data from Twitter®, user profile data from Linkedin®, user location data from Instagram®, user credit history and loans data, user browsing history, user location data, legal data of the user, median salary records of the user, bank transaction details, life events from social media networks, property or any other asset information, mortgage information, discretionary spend estimate, census data, call centre data, and data obtained from user wearables. In an exemplary embodiment of the present invention, the user segmentation engine 206 performs a search, mapping and correlation of user data based on a series of matches including, but not limited to, user fields such as first name, last name, location, home address, telephone no., email address, photograph, common friends in multiple networks etc. The user segmentation engine 206 analyses the retrieved data using various machine learning techniques to parse various structured, unstructured data and translate into meaningful data. FIGs. 2d and 2e illustrate a screen shot of an exemplary graphical user-interface display illustrating a representation of the selected user's data from external systems databases 214. The user segmentation engine 206, thereafter, invokes the data integration engine 208.

In an embodiment of the present invention, the data integration engine 208 retrieves the analyzed data from the user segmentation engine 206 for integrating the data in a meaningful manner. In particular, the data integration engine 208 classifies the analyzed data into various specific data fields and links the data to develop a hypergraph structure. In particular, the data integration engine 208 identifies a first set of variables from the retrieved data and organizes the variables into corresponding data fields. The variables in the corresponding data field are organized in a manner such that the variables can be linked across the data fields in a meaningful manner. The data fields are categorized in accordance with one or more predetermined types of data categories. Further, the data integration engine 208 creates new data fields for accommodating additional data retrieved from the external systems databases 214. The data integration engine 208 derives a second set of variables from the additional retrieved data and classifies such variables into the new data fields. In various embodiments of the present invention, the hypergraph structure offers optimized, efficient, accurate, easy to use and high performance read and write of use data in a dynamic format. Consequently, the hypergraph structure accounts for frequent changes as well as capture of temporal user evolutionary data. This results in faster, more accurate analytics and insights.

By linking the variables across the data fields, the data integration engine 208 generates a hypergraph. In an exemplary embodiment of the present invention, a first set of data fields may include, but is not limited to, user id, social handle, transactional data, store id, contact centre interactions, sensor data from wearables, kiosk interactions, mobile location data, website metrics obtained from user's browsing history. A transaction or interaction graph is generated by linking variables in these field columns. A second set of data fields may include, but is not limited to, social handle, followers and followings,interactions, personality, likes, dislikes, comments, posts, tweets, status, pictures, videos, interests (music, movies, books)etc. A social graph is generated by linking variables in these field columns. A third set of data fields may include, but is not limited to, user id, social handle, first name, middle name, surname, age, gender, ethnicity, marital status, income, language, location, honours, awards, occupation, education etc. A profile graph is generated by linking variables in these field columns. A fourth set of data fields may include user id, social handle, changes in measures of demographic, psychographic and network activity variables over time. A temporal graph is generated by linking variables in these data fields. The data integration engine 208 analyzes the transaction or integration graph, social graph, profile graph, and the temporal graph to generate a hypergraph by further linking variables across the graphs. Fig. 2f is an exemplary representation of variables ascertained based on analysis of data and linking of variables across the data fields, in accordance with various embodiments of the present invention. In an embodiment of the present invention, the data integration engine 208 uses advanced analytics solutions to analyze the generated hypergraph in order to derive correlation between user profile, various user activities and behavior in the context of enterprise systems and external or third party systems. Based on the analysis, for example, user lead score, risk sore, virality and velocity analysis score, social meme extraction score, theme and feature extraction score, social net promoter score, network analysis based ambassadors and detractors scores, global risk identification scores, advanced up-sale cross-sale analytics score, identity disambiguation score, influencer analysis score, life event detection and user psychographic analysis score may be generated. For example, velocity is a measure of how quickly the information is spreading. For a blog, it may be the number of new readers per hour, for a Twitter Source, it may be the number of re-tweets per hour, for a fan page on Facebook, it may be the number of fans added per day. Virality is a measure of the conversation spread and is measured by the number of people the message is spreading to. Volume is a measure of the total number of unique users reached. Sentiment analysis is a measure of positive or negative things being said. Sentiment is measured using advanced Natural Language Processing. Additionally, sentiments may also be identified along multiple dimensions, including, but not limited to, positive vs negative, strong vs weak, and active vs passive. Ambassador score is a measure of the number of positive influencers and detractor score is a measure of the number of negative influencers. Social net promoter score is derived from the number of ambassadors versus the number of detractors. The data integration engine 208 inputs the generated scores at appropriate data fields.

In an embodiment of the present invention, the user profile generation engine 210 communicates with the data integration engine 208 to build a comprehensive profile of the selected user. The user profile generation engine 210 prompts the end-user to select specific time intervals and builds a comprehensive profile of the selected user for the selected time intervals. In particular, the user profile generation engine 210 accesses the data integration engine 208 to analyze the generated hypergraph for the selected user. The comprehensive profile is generated by deriving information related to the selected user from the hypergraph, including but not limited to, his personality type (e.g. openness, extraversion, neuroticism, consciousness, and agreeableness), sentiment score, areas of interests, loan and credit dealings, social interactions, geographical data etc. Additionally, the user profile generation engine 210 also generates user clusters for each selected time interval by analyzing the hypergraph to ascertain user's relationships including, but not limited to, number of friends, followers, network centrality, groups, etc. across several social destinations. In various embodiments of the present invention, the user profile generation engine 210 displays the generated comprehensive profile via the graphical user-interface 216. Fig.2g is a screenshot of an exemplary graphical user-interface display illustrating a representation of the selected user's comprehensive profile. The end-users may view the comprehensive profile for recommending products and services to the selected users. In various embodiments of the present invention, the user profile generation engine 210 generates reports, for instance a summary report and a page-wise detailed report. The reports may be generated in a PDF or HTML format for ease of reference and further processing.

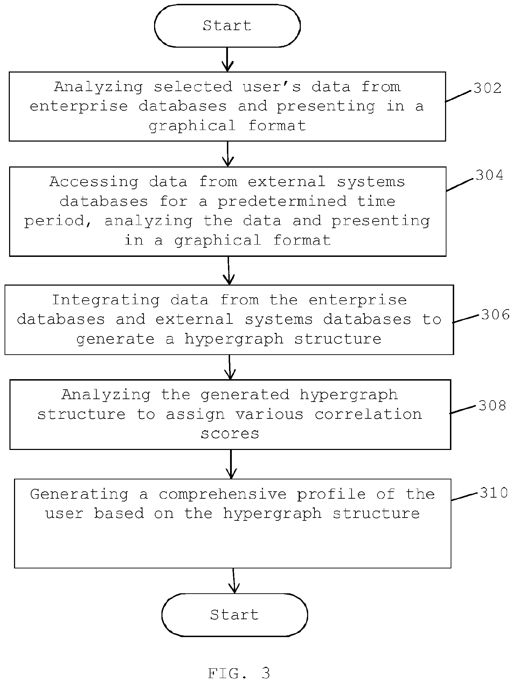

FIG.3 is a flowchart illustrating a method of operating an interactive user-interface based analytics engine (system), in accordance with various embodiments of the present invention.

At step 302, data related to a selected user is accessed from enterprise databases, analyzed and presented in a graphical format. In an embodiment of the present invention, the end-user accesses the system via a graphical user-interface. Post authentication, the system provides a list of first order and second order employees of the enterprise who deal with each of the users. Various parameters corresponding to the users displayed in the list are analyzed from enterprise databases. Examples of parameters may include, but is not limited to, risk analysis of user's engagements with the enterprise, quality and loan payment data, revenue generation information, product vs. user lifetime distribution data, credit score distribution vs. current balance data, data related to probability of attrition etc. Based on the analysis, the system creates graphical representations using the data to illustratively depict trends of the user's transactional behavior with respect to each of the parameters. The graphical user-interface prompts the end-user to select a specific user whose comprehensive profile is desired to be generated by the end-user. Selection of a specific user triggers display of trends of the selected user's transactional behavior with respect to each of the parameters. Further, the system fetches and analyses data related to the selected user's profile information for graphically representing details such as user age group, gender etc.

At step 304, data related to the selected user is accessed from external systems for a predetermined time period for analysis. In an exemplary embodiment of the present invention, external systems databases include, but are not limited to, one or more databases that store user life event data from Facebook®, user conversations data from Twitter®, user profile data from Linkedin®, user location data from Instagram®, user credit history and loans data, user browsing history, user location data, legal data of the user, median salary records of the user, bank transaction details, life events from social media networks, property or any other asset information, mortgage information, discretionary spend estimate, census data, and data obtained from user wearables. The retrieved data is analyzed using various machine learning techniques to parse various structured, unstructured data and translate into meaningful data.

At step 306, the data from the enterprise databases and external systems databases is integrated to generate a hypergraph structure. In an embodiment of the present invention, the analyzed data is classified into various specific data fields based on one or more predetermined types of data categories. The classified data in the various data fields are linked to develop a hypergraph structure. In particular, a first set of variables from the retrieved data is determined and organized into corresponding data fields. The first set of variables in the corresponding data fields are classified in a manner such that the variables can be linked across the fields in a meaningful manner. The first set of data fields are categorized in accordance with one or more predetermined data categories. In an exemplary embodiment of the present invention, a first set of data fields may be categorized in accordance with a first type of predetermined data category, but is not limited to, user id, social handle, transactional data, store id, contact centre interactions, sensor data from wearables, kiosk interactions, mobile location data, website metrics obtained from user's browsing history. A transaction or interaction graph is generated by linking variables in these data fields. A second set of data fields may be categorized in accordance with a second type of predetermined data category, including, but is not limited to, social handle, followers and followings,interactions, personality, likes, dislikes, comments, posts, tweets, status, pictures, videos, interests (music, movies, books)etc. A social graph is generated by linking variables in these data fields. A third set of data fields may be categorized in accordance with a third type of predetermined data category, including, but is not limited to, user id, social handle, first name, middle name, surname, age, gender, ethnicity, marital status, income, language, location, honours, awards, occupation, education etc. A profile graph is generated by linking variables in these data fields. A fourth set of data fields may be categorized in accordance with a fourth type of predetermined data category 'including, but is not limited to, user id, social handle, changes in measures of demographic, psychographic and network activity variables over time. A temporal graph is generated by linking variables in these data fields. The transaction or integration graph, social graph, profile graph, and the temporal graph are analyzed to generate a hypergraph by further linking variables across the graphs. In an embodiment of the present invention, a new set of data fields is generated by analyzing additional data that is retrieved from the external systems. After the classification of the first set of variables, the external system is monitored for additional data at predetermined time intervals. Based on the analysis, the new data fields are the generated. A second set of variables is generated from the additional retrieved data. Consequently, the second set of variables is classified into the new data fields. The classification takes place in a manner such that the second set of variables is linkable across the new data fields in a meaningful manner in accordance with the one or more predetermined data categories as described above in relation to the first set of data fields.

At step 308, the generated hypergraph structure is analyzed to assign various correlation scores. In an embodiment of the present invention, the generated hypergraph is analyzed in order to derive correlation between user profile, various user activities and behavior in the context of enterprise systems and external or third party systems. Based on the analysis, for example, user lead score, risk score, virality and velocity analysis score, social meme extraction score, theme and feature extraction score, social net promoter score, network analysis based ambassadors and detractors scores, organizational reputation score, global risk identification scores, advanced up-sale cross-sale analytics score, identity disambiguation score, influencer analysis score, life event detection and user psychographic analysis score may be generated. The generated scores are then inputted at appropriate field columns and is automatically reflected on the hypergraph structure.

At step 310, a comprehensive profile of the selected user is generated based on the hypergraph structure. In an embodiment of the present invention, specific time intervals are selected by the end-user via the graphical user-interface and a comprehensive profile of the selected user is generated for the selected time intervals. In particular, the comprehensive profile is generated by deriving information related to the selected user from the hypergraph, including but not limited to, his personality type (e.g. openness, extraversion, neuroticism, consciousness, and agreeableness), sentiment score, areas of interests, loan and credit dealings, social interactions, geographical data etc. Additionally, user clusters are generated for each selected time interval by analyzing the hypergraph to ascertain user's relationships including, but not limited to, number of friends, followers, network centrality, groups, etc. across several social destinations. In various embodiments of the present invention, the generated comprehensive profile is displayed via the graphical user-interface. The end-users may view the comprehensive profile for recommending products and services to the selected users. In various embodiments of the present invention, reports may be generated based on the comprehensive profile of the selected user. For instance, a summary report and a page-wise detailed report may be generated in a PDF or HTML format for ease of reference and further processing.

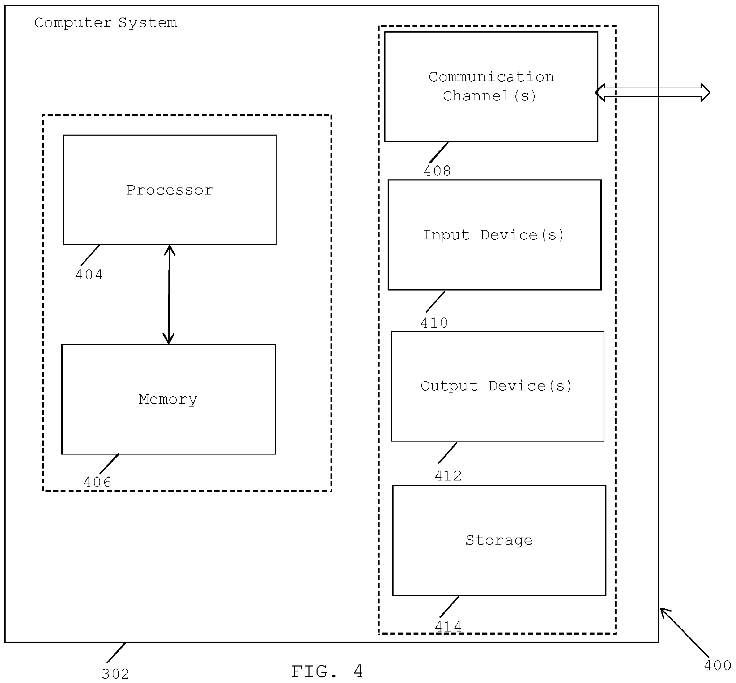

FIG. 4 illustrates an exemplary computer system in which various embodiments of the present invention may be implemented.

The computer system 402 comprises a processor 404 and a memory 406. The processor 404 executes program instructions and is a real processor. The computer system 402 is not intended to suggest any limitation as to scope of use or functionality of described embodiments. For example, the computer system 402 may include, but not limited to, a programmed microprocessor, a micro-controller, a peripheral integrated circuit element, and other devices or arrangements of devices that are capable of implementing the steps that constitute the method of the present invention. In an embodiment of the present invention, the memory 406 may store software for implementing various embodiments of the present invention. The computer system 402 may have additional components. For example, the computer system 402 includes one or more communication channels 408, one or more input devices 410, one or more output devices 412, and storage 414. An interconnection mechanism (not shown) such as a bus, controller, or network, interconnects the components of the computer system 402. In various embodiments of the present invention, operating system software (not shown) provides an operating environment for various softwares executing in the computer system 402, and manages different functionalities of the components of the computer system 402.

The communication channel(s) 408 allow communication over a communication medium to various other computing entities. The communication medium provides information such as program instructions, or other data in a communication media. The communication media includes, but not limited to, wired or wireless methodologies implemented with an electrical, optical, RF, infrared, acoustic, microwave, bluetooth or other transmission media.

The input device(s) 410 may include, but not limited to, a keyboard, mouse, pen, joystick, trackball, a voice device, a scanning device, or any another device that is capable of providing input to the computer system 402. In an embodiment of the present invention, the input device(s) 410 may be a sound card or similar device that accepts audio input in analog or digital form. The output device(s) 412 may include, but not limited to, a user interface on CRT or LCD, printer, speaker, CD/DVD writer, or any other device that provides output from the computer system 302.

The storage 414 may include, but not limited to, magnetic disks, magnetic tapes, CD-ROMs, CD-RWs, DVDs, flash drives or any other medium which can be used to store information and can be accessed by the computer system 402. In various embodiments of the present invention, the storage 414 contains program instructions for implementing the described embodiments.

The present invention may suitably be embodied as a computer program product for use with the computer system 402. The method described herein is typically implemented as a computer program product, comprising a set of program instructions which is executed by the computer system 402 or any other similar device. The set of program instructions may be a series of computer readable codes stored on a tangible medium, such as a computer readable storage medium (storage 414), for example, diskette, CD-ROM, ROM, flash drives or hard disk, or transmittable to the computer system 402, via a modem or other interface device, over either a tangible medium, including but not limited to optical or analogue communications channel(s) 408. The implementation of the invention as a computer program product may be in an intangible form using wireless techniques, including but not limited to microwave, infrared, bluetooth or other transmission techniques. These instructions can be preloaded into a system or recorded on a storage medium such as a CD-ROM, or made available for downloading over a network such as the internet or a mobile telephone network. The series of computer readable instructions may embody all or part of the functionality previously described herein.

The present invention may be implemented in numerous ways including as a system, a method, or a computer program product such as a computer readable storage medium or a computer network wherein programming instructions are communicated from a remote location.

While the exemplary embodiments of the present invention are described and illustrated herein, it will be appreciated that they are merely illustrative. It will be understood by those skilled in the art that various modifications in form and detail may be made therein without departing from or offending the spirit and scope of the invention as defined by the appended claims.

## Claims

1. A system for generating a hypergraph representative of one or more comprehensive profiles of one or more users, by invocation of an interactive user-interface by an end-user via a client device, the system comprising:
a memory storing program instructions;
a processor executing program instructions stored in the memory;
a user segmentation engine in communication with the processor and configured to:
generate and render a first graphical representation of a selected user's transactional behavior, based on an analysis of one or more parameters associated with the selected user stored in an enterprise database; and
retrieve data associated with the selected user from external systems for a predetermined time period;
and
a data integration engine in communication with the processor and configured to:
determine a first set of variables from the retrieved data;
classify the first set of variables into one or more data fields, the classification resulting in the variables across relevant data fields being linkable in accordance with one or more predetermined types of data categories associated with the selected user;
generate new data fields for realizing classification of additional retrieved data, the number of new data fields being generated based on an analysis of the additional retrieved data, wherein the generation of new data field columns is triggered after the classification of the first set of variables ;
determine a second set of variables from the retrieved data;
classify the second set of variables into the new one or more data fields, the classification resulting in the variables across the relevant new data fields being linkable in accordance with the one or more predetermined types of data categories associated with the selected user;
generate two or more graphical representations by linking the variables across the relevant data fields, respectively, in accordance with the one or more predetermined types of data categories associated with the selected user; and
analyze the two or more generated graphical representations and generating a hypergraph by integrating the two or more graphical representations and the first graphical representation, wherein based on the hypergraph a comprehensive profile of the selected user is generated.

2. The system as claimed in claim 1, wherein the data integration engine is configured to:
analyze the generated hypergraph and derive a correlation between the generated comprehensive user profile of the selected user and activities and behavior associated with the selected user based on data retrieved from the external systems;
compute a correlation score based on the analysis;
assign the computed correlation score in one or more relevant data fields; and
generate and render the hypergraph with the correlation score.

3. The system as claimed in claim 1, a user profile generation engine in communication with the data integration engine and configured to:
derive information related to the selected user based on an analysis of the hypergraph;
generate user clusters relating to the selected user for each selected predetermined time interval; and
generate a comprehensive profile of the selected user based on the derived information and generated user clusters.

4. A computer-implemented method of operating an interactive user-interface based analytics engine for generating a hypergraph representative of one or more comprehensive profiles of one or more users, by invocation of said interactive user-interface by an end-user, the method comprising:
generating and rendering a first graphical representation of a selected user's transactional behavior, based on an analysis of one or more parameters associated with the selected user stored in an enterprise database;
retrieving data associated with the selected user from external systems for a predetermined time period;
determining a first set of variables from the retrieved data;
classifying the first set of variables into one or more data fields, the classification resulting in the variables across relevant data fields being linkable in accordance with one or more predetermined types of data categories associated with the selected user;
generating new data fields for realizing classification of additional retrieved data, the number of new data fields being generated based on an analysis of the additional retrieved data, wherein the generation of new data field columns is triggered after the classification of the first set of variables ;
determining a second set of variables from the retrieved data;
classifying the second set of variables into the new one or more data fields, the classification resulting in the variables across the relevant new data fields being linkable in accordance with the one or more predetermined types of data associated with the selected user;
generating two or more graphical representations by linking the variables across the relevant data fields, respectively, in accordance with the one or more predetermined types of data categories associated with the selected user; and
analyzing the two or more generated graphical representations and generating a hypergraph by integrating the two or more graphical representations and the first graphical representation, wherein based on the hypergraph a comprehensive profile of the selected user is generated.

5. The computer-implemented method as claimed in claim 4, wherein the step of generating two or more graphical representations comprise generating an interaction graph by linking variables across a first set of data fields corresponding to a first type of predetermined data category.

6. The computer-implemented method as claimed in claim 4, wherein the step of generating two or more graphical representations comprise generating a social graph by linking variables across a second set of data fields corresponding to a second type of predetermined data category.

7. The computer-implemented method as claimed in claim 4, wherein the step of generating two or more graphical representations comprise generating a profile graph by linking variables across a third set of data fields corresponding to a third type of predetermined data category.

8. The computer-implemented method as claimed in claim 4, wherein the step of generating two or more graphical representations comprise generating a temporal graph by linking variables across a fourth set of data fields corresponding to a fourth type of predetermined data category.

9. The computer-implemented method as claimed in claim 4, further comprising:
analyzing the generated hypergraph and deriving a correlation between the generated comprehensive user profile of the selected user and activities and behavior associated with the selected user based on data retrieved from the external systems;
computing a correlation score based on the analysis;
assigning the computed correlation score in one or more relevant data fields; and
generating and rendering the hypergraph with the correlation score.

10. The computer-implemented method as claimed in claim 1, wherein a comprehensive profile of the selected user is generated based on the hypergraph structure by:
deriving information related to the selected user based on an analysis of the hypergraph;
generating user clusters relating to the selected user for each selected predetermined time interval; and
generating a comprehensive profile of the selected user based on the derived information and generated user clusters.
